# FASCICULE DE BREVET EUROPEEN

(11) **EP 1 064 068 B1**
(45) Date de publication et mention de la délivrance du brevet: **18.12.2002**
(21) Numéro de dépôt: 99902627.1
(22) Date de dépôt: 09.02.1999
(51) Int. Cl.: B01D 21/24, B01D 21/30

(54) **DISPOSITIF ASSURANT LA RECUPERATION DES FLOTTANTS DANS DES BASSINS DE DECANTATION**
VORRICHTUNG ZUR RÜCKGEWINNUNG DER SCHWIMMSTOFFE IN KLÄRBECKEN
ORRICHTUNG

(30) Priorité: 16.03.1998 FR 9803198
(43) Date de publication de la demande: 03.01.2001
(73) Titulaire: ONDEO DEGREMONT, 92500 Rueil-Malmaison (FR)
(72) Inventeur: SUHR, Patrick, F-92500 Rueil Malmaison (FR); VIRECOULON, Jean, Pierre, F-92500 Rueil Malmaison (FR)
(74) Mandataire: Armengaud Ainé, Alain
(86) Numéro de dépôt international: FR9900281
(87) Numéro de publication internationale: WO99047231

(56) Documents cités:
- DE-A- 3 405 468
- DE-U- 9 115 155
- FR-A- 2 189 325
- FR-A- 2 345 400
- FR-A- 2 429 185
- US-A- 3 307 701
- US-A- 4 931 175
- US-A- 5 380 431

## Description

La présente invention concerne un dispositif destiné à assurer la récupération des nappes de graisse appelées « flottants » qui se forment dans les décanteurs de traitement d'eaux résiduaires, après la zone de floculation. Ce dispositif s'applique plus particulièrement à des décanteurs de forme rectangulaire.

Dans de tels décanteurs, les flottants se forment soit naturellement, soit en tant que résultat d'un dégraissage, et que la masse des flottants est d'autant plus importante lorsqu'elle résulte d'un traitement in situ de dégraissage de l'effluent. Il est donc essentiel d'effectuer périodiquement une évacuation de ces flottants, pour le bon déroulement du processus de décantation et également pour l'esthétique de l'ouvrage.

A l'heure actuelle, on utilise des systèmes de récupération des flottants qui sont réalisés sous la forme d'une goulotte partiellement immergée, ouverte en partie supérieure, positionnée à l'extrémité du bassin et dont le basculement périodique, manuel ou motorisé, crée une lame d'eau entraînant les flottants lesquels sont ensuite évacués hors du bassin de décantation par l'intermédiaire d'un canal d'évacuation.

En conditions réelles d'utilisation, ces dispositifs connus présentent notamment les inconvénients suivants :
- problème d'étanchéité dynamique entre le bassin de décantation et le canal d'évacuation des flottants, au niveau de la goulotte ;
- présence d'une quantité importante d'eau accompagnant les flottants, se traduisant par une dilution de ces derniers, cette dilution handicapant tout traitement des graisses en aval,
- récupération aléatoire des flottants épais, difficiles à entraîner par une mince lame d'eau et,
- évacuation gravitaire difficile des flottants dans la goulotte.

Partant de cet état de la technique, la présente invention se propose d'apporter un nouveau dispositif permettant d'éviter les inconvénients soulignés ci-dessus.

En conséquence, la présente invention a pour objet un bassin de décantation de forme rectangulaire pour installations de traitement d'eaux résiduaires comportant un dispositif de récupération des flottants qui est constitué :
- d'une écope rotative, placée à une extrémité du bassin de décantation et comprenant : un tube d'écoulement émergé muni d'une lumière longitudinale et fermé à une extrémité et ouverte à l'autre extrémité par l'intermédiaire d'une fente ; un godet soudé sur ledit tube d'écoulement de telle sorte que le contenu du godet soit déversé dans le tube d'écoulement au travers de la lumière au cours de la rotation de l'ensemble, un moto-réducteur entraînant en rotation ladite écope ; et
- d'un déflecteur sur la paroi du bassin le long de laquelle est montée ladite écope, ce déflecteur étant placé à la hauteur prévue pour le niveau de l'eau dans ledit bassin et coopérant avec le godet afin d'éviter toute zone morte dans la zone de prélèvement des flottants.

Selon un mode de réalisation préféré de l'invention, le moteur d'entraînement est monté à l'une des extrémités du tube d'écoulement par l'intermédiaire d'un accouplement comportant une bride et un système de plot élastique, et l'on prévoit, à l'autre extrémité dudit tube, un système de support constitué de galets, disposés de préférence à 120° les uns des autres.

Selon la présente invention, on prévoit un capteur inductif détectant la position d'arrêt de ladite écope rotative, à l'aide d'un plot métallique qui est prévu sur la bride de couplage du moteur au tube d'écoulement.

De préférence, selon la présente invention, le dispositif est mis en oeuvre selon une rotation complète, suivie d'une temporisation mais cette mise en oeuvre peut être effectuée selon plusieurs rotations consécutives, suivies d'une temporisation ou selon une rotation continue, en fonction des débits d'évacuation souhaités. On peut prévoir un automatisme de commande du moteur, basé sur une temporisation ajustable, fixant la période d'attente entre deux cycles de récupération des flottants.

D'autres caractéristiques et avantages de la présente invention ressortiront de la description faite ci-après en référence au dessin annexé qui en illustre un exemple de réalisation dépourvu de tout caractère limitatif.

Sur le dessin :
- la figure 1 représente en perspective le dispositif objet de l'invention,
- la figure 2 est une vue en bout de ce dispositif en fonctionnement, illustrant les diverses étapes du prélèvement des flottants et,
- la figure 3 est une vue similaire à la figure 2 représentant une variante du dispositif selon l'invention.

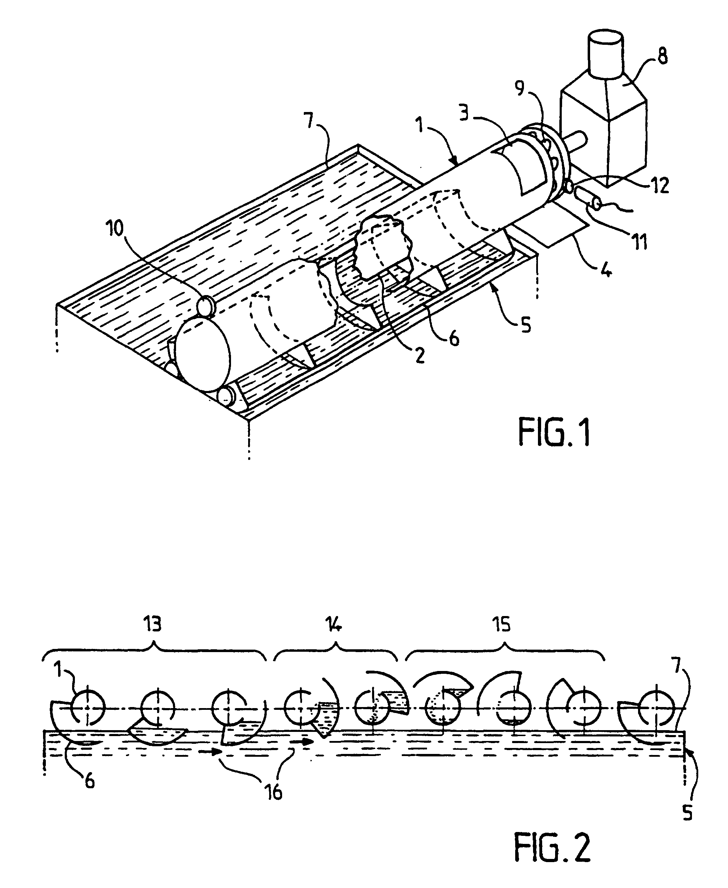

En se référant à la figure 1 du dessin annexé, on voit que le dispositif objet de la présente invention se présente sous la forme d'une écope rotative de construction mécano-soudée, qui est implantée au-dessus du bassin de décantation 5, à une extrémité de celui-ci. Dans l'exemple de réalisation illustré par la figure 1, ce dispositif comporte les éléments suivants :
- un tube d'écoulement émergé 1, qui est pourvu d'une lumière longitudinale 2 en forme de fente, tout le long du tube 1, ce dernier étant fermé à une extrémité et ouvert à l'autre extrémité par l'intermédiaire d'une fenêtre 3, cette dernière étant positionnée au-dessus d'un orifice d'évacuation 4 . Ce tube comme on le voit clairement sur la figure 1 intéresse toute la largeur du bassin de décantation 5 ;
- un godet 6, de préférence compartimenté, immergé (lors de la phase de collecte des flottants comme on le verra ci-après) sous le niveau 7 du liquide contenu dans le bassin de décantation 5, ce godet 6 étant soudé sur le tube d'écoulement 1, sur toute la longueur de ce dernier;
- à l'extrémité ouverte du tube 1, un moto-réducteur 8 d'entraînement en rotation, bridé sur le tube 1 par exemple à l'aide de plots élastiques tels que 9, le support du tube 1 étant assuré, côté extrémité fermée, par l'intermédiaire, par exemple, de galets 10 disposés à 120°.

Ce dispositif peut en outre comporter un capteur inductif 11 détectant la position d'arrêt de l'écope à l'aide d'un plot métallique 12 qui est prévu sur la bride de couplage du moto-réducteur 8 au tube 1.

Selon l'invention, on peut également prévoir un automatisme de commande du moto-réducteur 8, qui repose sur une simple temporisation ajustable, fixant la période d'attente entre deux cycles de récupération des flottants.

Le fonctionnement du dispositif ainsi décrit est particulièrement simple. Ce fonctionnement est illustré de façon schématique par la figure 2 du dessin annexé qui représentent les positions successives du dispositif lors d'une opération de récupération des flottants.

Comme on le comprend, l'écope rotative selon l'invention récupère à chaque rotation les flottants qui se sont accumulés contre la paroi du bassin 5 ainsi qu'un volume limité d'eau. Cette récupération (étape 13 sur la figure 2) s'éffectue grâce à la présence du godet 6. On notera que le dispositif objet de la présente invention permet d'assurer une récupération des flottants, quelque soit leur épaisseur, contrairement au système de goulotte qui ne récupère pas ou qui récupère mal les flottants épais.

Lors de l'étape suivante 14, les flottants accompagnés du volume d'eau limité sont déversés dans le tube d'écoulement 1 au travers de la lumière longitudinale 2 de ce dernier (le positionnement du godet 6 par rapport à ladite lumière 2 est déterminé de manière à ce que ce déversement soit possible, c'est-à-dire que le godet est disposé au-dessus de la lumière 2) et le tout est ensuite évacué par gravité dans l'orifice d'évacuation 4 au travers de l'ouverture 3 du tube d'écoulement 1 (étape 15). On notera que grâce à la mise en oeuvre de l'invention, on réalise une mise en suspension des flottants par la chute durable du volume d'eau, phénomène qui facilite l'évacuation gravitaire dans le tube d'écoulement 1 et qui produit un rinçage à l'intérieur du tube.

Le prélèvement du volume de liquide dans le bassin 5 crée un courant désigné par les flèches 16 sur la figure 2, qui entraîne les flottants suivants contre la paroi du bassin où est implantée l'écope rotative.

Le mode de mise en oeuvre du dispositif objet de l'invention peut être réalisé soit par une rotation complète, suivie d'une temporisation, soit par plusieurs rotations consécutives de l'écope, suivies d'une temporisation, ou par rotation continue, en fonction des débits d'évacuation souhaités.

Selon l'invention, le dispositif est positionné à contre courant, l'ouverture du godet immergé étant opposée à la paroi du bassin, le long de laquelle est positionnée l'écope rotative objet de l'invention.

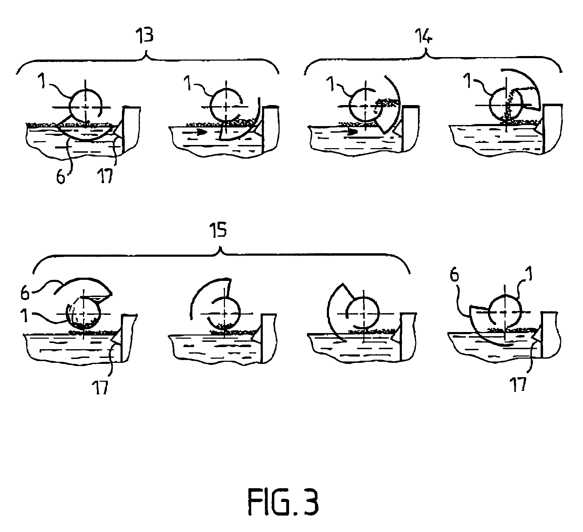

Sur la figure 3 qui est une vue similaire à celle de la figure 2, et sur laquelle les composants identiques ont été désignés par les mêmes références, on voit le déflecteur 17 prévu sur la paroi du bassin 5 le long de laquelle est montée ladite écope rotative, à la hauteur du niveau de l'eau dans ledit bassin, afin d'éviter toute zone morte dans la zone de prélèvement des flottants. Dans cet exemple de réalisation non limitatif, ce déflecteur 17 a été réalisé sous la forme d'une cornière retournée. On a reporté sur cette figure 3 les différentes étapes 13, 14, 15 de fonctionnement décrites ci-dessus en référence à la figure 2. On a représenté par un trait sombre, les flottants de manière à les distinguer du volume d'eau écopé et sur cette figure on voit que les flottants s'écoulent en premier dans le tube 1 et que l'eau écopée rince le tube dans un deuxième temps.

## Revendications

1. Bassin de décantation de forme rectangulaire pour installations de traitement d'eaux résiduaires comportant un dispositif de récupération des flottants qui est constitué :
- d'une écope rotative, placée à une extrémité du bassin de décantation (5) et comprenant : un tube d'écoulement émergé (1) muni d'une lumière longitudinale (2) et fermé à une extrémité et ouvert à l'autre extrémité par l'intermédiaire d'une fente (3) ; un godet (6) soudé sur ledit tube d'écoulement de telle sorte que le contenu du godet (6) soit déversé dans le tube d'écoulement (1) au travers de la lumière (2) au cours de la rotation de l'ensemble, un moto-réducteur (8) entraînant en rotation ladite écope ; et
- d'un déflecteur (17) sur la paroi du bassin (5) le long de laquelle est montée ladite écope, ce déflecteur étant placé à la hauteur prévue pour le niveau de l'eau dans ledit bassin et coopérant avec le godet (6) afin d'éviter toute zone morte dans la zone de prélèvement des flottants.

2. Dispositif selon la revendication 1, **caractérisé en ce que** ledit déflecteur (17) est réalisé sous la forme d'une cornière retournée.

3. Dispositif selon la revendication 1, **caractérisé en ce que** ledit godet (6) est compartimenté.

4. Dispositif selon l'une des revendications 1 ou 2, **caractérisé en ce que** ledit moto-réducteur d'entraînement en rotation (8) est monté, à l'une des extrémités dudit tube d'écoulement (1) par l'intermédiaire d'un accouplement comportant une bride et des plots élastiques (9), et l'on prévoit, à l'autre extrémité dudit tube un système de support constitué de galets, de préférence trois galets disposés à 120° les uns des autres.

5. Dispositif selon l'une quelconque des revendications précédentes, **caractérisé en ce qu'**il comporte un capteur inductif (11) détectant la position d'arrêt de l'écope rotative à l'aide d'un plot métallique (12) prévu sur la bride de couplage du moteur (8) au tube (1).

6. Dispositif selon l'une quelconque des revendications précédentes, **caractérisé en ce qu'**il comporte un automatisme de commande du moto-réducteur (8) qui est basé sur une temporisation ajustable, fixant la période d'attente entre deux cycles de récupération des flottants.

7. Utilisation d'un bassin de décantation et d'un dispositif de récupération des flottants selon l'une quelconque des revendications 1 à 6, **caractérisée en ce que**, au cours de la phase d'immersion du godet (6), l'ouverture de ce dernier est opposée à la paroi du bassin le long de laquelle est montée ladite écope.

8. Utilisation d'un bassin de décantation et d'un dispositif de récupération des flottants selon l'une quelconque des revendications 1 à 7 selon laquelle le moto-réducteur (8) entraîne en rotation périodique sur 360° l'ensemble tube d'écoulement (1) + godet (6) de manière que les flottants soient récupérés à chaque rotation par ledit godet dont la position par rapport au tube d'écoulement émergé (1) est déterminée de façon que lesdits flottants soient déversés dans ledit tube par l'intermédiaire de sa lumière longitudinale (2) puis évacués par gravité au travers de l'extrémité ouverte (3) dudit tube émergé.

9. Utilisation d'un bassin de décantation et d'un dispositif de récupération des flottants selon l'une quelconque des revendications 1 à 7 selon laquelle le moto-réducteur (8) entraine ladite écope rotative soit selon une rotation complète suivie d'une temporisation, soit selon plusieurs rotations consécutives suivies d'une temporisation, soit selon une rotation continue, en fonction des débits d'évacuation souhaités.

## Patentansprüche

1. Absetzbecken in Rechteckform für Abwasserbehandlungsanlagen, welches eine Vorrichtung zum Abziehen von Schwimmstoffen umfasst, die gebildet ist aus
- einem drehbaren Schöpfwerk, das an einem Ende des Absetzbeckens (5) angeordnet ist und umfasst : ein herausgehobenes, mit einem Längsschlitz (2) ausgestattetes, an einem Ende geschlossenes und am anderen Ende vermittels eines Spaltes (3) offenes Strömungsrohr (1), einen Schöpfkübel (6), die am Strömungsrohr derart angeschweißt ist, dass der Inhalt des Schöpfkübels (6) während der Drehung der Baugruppe durch den Längsschlitz (2) hindurch in das Strömungsrohr (1) ausgeschüttet wird, und einen Getriebemotor (8), das dieses Schöpfwerk in Umdrehung versetzt, und
- einer Ablenkeinrichtung (17) an der Wand des Beckens (5), entlang deren besagtes Schöpfwerk angebracht ist, wobei diese Ablenkeinrichtung in der für den Wasserspiegel in dem Becken vorgesehenen Höhe angeordnet ist und mit dem Schöpfkübel (6) zusammenwirkt, um jede Totwasserzone im Bereich der Entnahme der Schwimmstoffe zu vermeiden.

2. Vorrichtung nach Anspruch 1, **dadurch gekennzeichnet, dass** die Ablenkeinrichtung (17) in Form eines umgekanteten Winkelprofils ausgeführt ist.

3. Vorrichtung nach Anspruch 1, **dadurch gekennzeichnet, dass** der Schöpfkübel (6) in Abteile unterteilt ist.

4. Vorrichtung nach einem der Ansprüche 1 oder 2, **dadurch gekennzeichnet, dass** der Getriebemotor (8) für die Drehbewegung mittels einer Kupplung mit einem Flansch und elastischen Klötzen (9) an einem Ende des Strömungsrohrs (1) angebracht ist, und dass am anderen Ende dieses Rohres ein aus Rollen, vorzugsweise aus drei um 120 ° versetzten Rollen gebildetes Lagersystem vorgesehen ist.

5. Vorrichtung nach einem der vorhergehenden Ansprüche, **dadurch gekennzeichnet, dass** sie einen Induktivsensor (11) umfasst, der die Anhalte-Stellung des drehbaren Schöpfwerks mithilfe eines Metallklotzes (12) erfasst, der am Flansch der Kupplung vom Motor (8) zum Rohr (1) vorgesehen ist.

6. Vorrichtung nach einem der vorhergehenden Ansprüche, **dadurch gekennzeichnet, dass** sie eine Steuerautomatik für den Getriebemotor (8) umfasst, die mit einer einstellbaren, die Wartezeit zwischen zwei Zyklen des Abziehens der Schwimmstoffe bestimmenden Zeitschaltung arbeitet.

7. Verwendung eines Absetzbeckens und einer Vorrichtung zum Abziehen von Schwimmstoffen nach einem der Ansprüche 1 bis 6, **dadurch gekennzeichnet, dass** die Öffnung des Schöpfkübels (6) sich während dessen Eintauchphase gegenüber der Wand des Beckens befindet, entlang deren das Schöpfwerk angebracht ist.

8. Verwendung eines Absetzbeckens und einer Vorrichtung zum Abziehen von Schwimmstoffen nach einem der Ansprüche 1 bis 7, bei der der Getriebemotor (8) die Baueinheit Strömungsrohr (1) + Schöpfkübel (6) derart in eine periodische Umdrehung um 360 ° versetzt, dass die Schwimmstoffe bei jeder Umdrehung von dem Schöpfkübel aufgenommen werden, dessen Position bezüglich des herausgehobenen Strömungsrohrs (1) derart bestimmt ist, dass die Schwimmstoffe in dieses Rohr durch dessen Längsschlitz (2) gelangen und dann durch Schwerkraft durch das offene Ende (3) des herausgehobenen Rohres abgeführt werden.

9. Verwendung eines Absetzbeckens und einer Vorrichtung zum Abziehen von Schwimmstoffen nach einem der Ansprüche 1 bis 7, bei der das Motorgetriebe (8) das drehbare Schöpfwerk abhängig vom gewünschten abzuziehenden Durchsatz entweder in eine vollständige Umdrehung, gefolgt von einem Halt-Zeitraum, oder in mehrere aufeinander folgende Umdrehungen, gefolgt von einem Halt-Zeitraum, oder in kontinuierliche Umdrehung versetzt.

## Claims

1. Rectangular-shaped settling tank for waste water treatment installations having a device for recovering floating substances which consist of:
- a rotary scoop, placed at one end of the settling tank (5) and comprising: an immersed discharge tube (1) provided with a longitudinal aperture (2) and closed at one end and open at the other end through a slot (3); a bucket (6) welded to the said discharge tube so that the content of the bucket (6) is poured into the discharge tube (1) through the aperture (2) during the rotation of the assembly, a geared motor (8) driving the said scoop in rotation; and
- a deflector (17) on the wall of the tank (1) along which the said scoop is mounted, this deflector being provided at the expected height of the water level in the said tank and cooperating with the bucket (6) in order to avoid any dead area in the area where the floating substances are taken off.

2. Device according to Claim 1, **characterised in that** the said deflector (17) is produced in the form of an inverted angle piece.

3. Device according to Claim 1, **characterised in that** the said bucket (6) is compartmentalised.

4. Device according to one of Claims 1 or 2, **characterised in that** the said geared motor (8) for driving in rotation is mounted at one of the ends of the said discharge tube (1) by means of a coupling having a flange and elastic studs (9), and there is provided, at the other end of the said tube, a support system consisting of rollers, preferably three rollers disposed at 120° to each other.

5. Device according to any one of the preceding claims, **characterised in that** it has an inductive sensor (11) detecting the stop position of the rotary scoop by means of a metallic stud (12) provided on the flange coupling the motor (8) to the tube (1).

6. Device according to any one of the preceding claims, **characterised in that** it has an automatic device for controlling the geared motor (8) which is based on an adjustable timer, fixing the waiting period between two floating substance recovery cycles.

7. Use of a settling tank and a device for recovering floating substances according to any one of Claims 1 to 6, **characterised in that**, during the phase of immersion of the bucket (6), the opening in the latter is opposite the wall of the tank along which the said scoop is mounted.

8. Use of a settling tank and a device for recovering floating substances according to any one of Claims 1 to 7, according to which the geared motor (8) drives the discharge tube (1) + bucket (6) assembly in periodic rotation over 360° so that the floating substances are recovered at each rotation by the said bucket, whose position with respect to the immersed discharge tube (1) is determined so that the said floating substances are poured into the said tube by means of its longitudinal aperture (2) and then discharged by gravity through the open end (3) of the said immersed tube.

9. Use of a settling tank and a device for recovering floating substances according to any one of Claims 1 to 7, according to which the geared motor (8) drives the said rotary scoop either in a complete rotation followed by a time delay, or according to several consecutive rotations followed by a time delay, or according to a continuous rotation, according to the required discharge rates.
